# EUROPEAN PATENT APPLICATION

(11) **EP 1 052 875 A2**
(43) Date of publication of application: **15.11.2000**
(21) Application number: 99201504.0
(22) Date of filing: 12.05.1999
(51) Int. Cl.: H04Q 11/04

(54) **ISDN system**

(30) Priority: 12.05.1999 IL 12444799
(71) Applicant: ECI TELECOM, 49130 Petah Tikva (IL)
(72) Inventor: Guzikevits, Zuri, 67196 Tel-Aviv (IL); Bukimer, Shalom, 58672 Holon (IL)
(74) Representative: de Bruijn, Leendert C.

(57) **Abstract**

An ISDN system comprising:
a network to telephone termination which supports a plurality of user terminals;
an ISDN data signal transceiver at the central office;
a line which connects the network to telephone termination to said transceiver and carries data signals to said plurality of user terminals; and
a power supply capable of supplying power to the network to telephone termination via said line such that said plurality of user terminals are fully powered from said network to telephone termination.

## Description

### FIELD OF THE INVENTION

The present invention relates generally to public switched telephone networks (PSTN), and specifically network terminations for the basic access to the large-scale ISDN service.

### BACKGROUND OF THE INVENTION

PSTNs traditionally provide switched voice type service. This service is autonomous and functional at least as long as the telephone sets, the lines and the switching equipment are intact.

In the past (before deregulation) the entire telephone system, including customer's telephones, was under the telephone company's responsibility. After deregulation, a "Demarcation Point" was added, usually where the lines enter customer's premises. This limited the telephone company's responsibility to providing voice type services and allowed the customer to choose his end user equipment.

Traditional telephone service depends on uninterrupted power feed from the central office and provides its services under normal as well as emergency conditions. This type of service is referred to a "life-line service" in the U.S.

ISDN (Integrated Service Digital Network) is a digital switched-circuit type service handled by the telephone companies in a manner very similar to plain old telephony service (POTS).

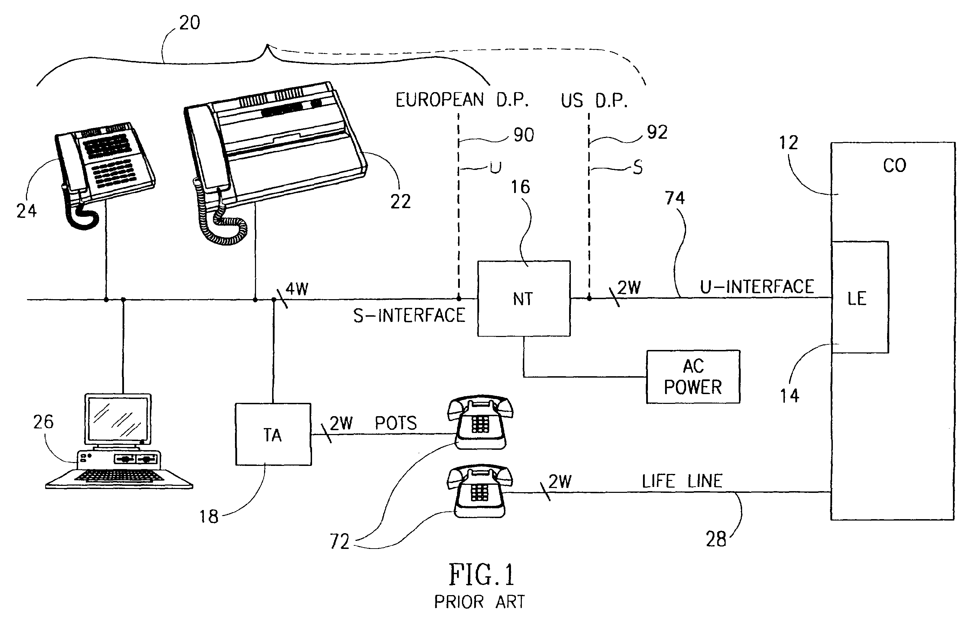

Reference is now made to Fig. 1 which schematically shows a conventional ISDN line. In general, ISDN service is supplied from a central office (CO) 12 via a local exchange (LE) 14 and over a digital ISDN line 74 to a network termination (NT) 16. The ISDN supports digital telephones 24, communication with computers 26 and/or ISDN compatible facsimile machines 22. In addition, the NT may support POTS analog telephones via a terminal adapter (TA) 18.

In many parts of the world (e.g. Europe), the demarcation point 90 lies after network termination (NT) 16 towards customer's premises. This is called the "S" reference point. In these systems power is supplied to the NT from a local AC power source. In emergency situations, power is supplied to the NT by the telephone company over line 74. In such a system, enough power is usually supplied to NT to supply at least one terminal, attached to the s-interface, with power. To retain its full functionality, the NT must be connected to local AC power source. However, if a number of local AC power sources fail, some local area network may suffer from insufficient emergency power supply from line 74.

In the USA, on the other hand, network terminations are considered customer's provided equipment so the demarcation point 92 is situated before the network termination, at the "U" reference point. In this case, the network termination, besides being customer owned, relies solely on local AC power. Thus, when no local power is available, the ISDN service is dead. As a consequence, the ISDN line is not regarded as a "Life-Line".

The fact that ISDN does not function without a local power source, has led to the need to add a second (POTS) line 28 whenever the use of ISDN services and a life-line telephone are desired.

In another available system analog telephony and ISDN signals are multiplexed at the central office and then sent on a digital line to a special NT at which the multiplexed signal are demultiplexed to supply ISDN service and analog service to the subscriber. Power is also supplied to the subscriber over this line. However, this power is not sufficient to fully power the ISDN user terminal connected to the NT.

In other prior art systems, two POTS analog telephony signals are multiplexed at a central office and then sent on a digital line to customer's premises were they are demultiplexed. Power for the demultiplexer and for feeding two POTS analog telephones is also provided over the same digital line.

In these two cases, multiplexing and demultiplexing equipment and methods are needed and standard telephony protocols are not used for communication over the line connecting the local office and the NT.

### SUMMARY OF THE INVENTION

According to one aspect of some preferred embodiments of the present invention a method and system for transmitting digital telephony signals to a network termination at a user premises together with power, preferably DC power, over a single line, is provided. The power supplied is sufficient to supply back-up power to the ISDN system. In a preferred embodiment of the invention the power is supplied, at all times, from a DC power supply situated at the central office (or between the central office and the network termination) which is hooked into a standard ISDN transmission line. The ISDN signals are preferably transmitted without changing the ISDN protocol. In preferred embodiments of the invention, **a** standard ISDN transmitter/receiver at the central office and a network **to** telephone termination -NT2T- unit without additional data multiplexing are utilized.

In accordance with an aspect of some preferred embodiments of the present invention an ISDN system is provided in which full power for the NT2T is provided by a source local to the NT2T and the full power is supplied from the central office when power from the local power fails. The full power from the central office is provided over a digital line over which the ISDN signals are transmitted.

In accordance with an aspect of some preferred embodiments of the invention an ISDN system is provided in which the power level available from the central office can be controlled, preferably at the central office. In some preferred embodiments of the invention, the available power from the central office is controlled to supply either full power or partial power to provide power to only one or a few terminals connected to the NT2T in the absence of a local power source.

In one preferred embodiment of the invention, the low and high powers modes utilize low and high voltage to supply power to the NT2T from the central office. In another preferred embodiment of the invention, the voltages may be the same or different for the two modes and the power limitation is determined by a current limitation.

In accordance with a preferred embodiment of the present invention, the telephone system includes a network termination power supply (NT-PS) unit. In accordance with a preferred embodiment of the present invention the NT-PS unit is positioned in the central office. In a preferred embodiment of the invention, all digital and analog telephony terminals at customer premises pertaining to an ISDN line are remotely power fed, via this line, from the NT-PS situated in the central office However, the back-up power supply may be placed in a separate cabinet situated close to the line between the central office and the network termination.

In accordance with some preferred embodiment of the present invention the NT2T unit preferably includes a digital interface unit which is 4-wire connected to ISDN terminals at the "S" point, an interface which is 2-wire connected to the central office at "U" point, at least two interfaces, each supporting a 2-wire analog telephone terminal (SLIC), which preferably provides the analog telephone terminals with all "BORSCHT" functions and a power supply which conditions the power from the central office and preferably generates all the voltages needed for internal operations. The NT2T unit may further comprise functions such as ring power signal generation preferably a 20 Hz, a drop test function to evaluate the status of the analog telephone line, a micro controller, optionally directly connected to peripherals through a 232 serial connection or other standard or non-standard interface, which runs other programs such as data transfer, software download, etc., an optional interface for connecting the NT2T unit to mains, etc.

In some preferred embodiments of the present invention digital communication signals to and from central office are preferably routed through a coupling circuit included in the NT-PS unit. In some preferred embodiments of the present invention, the NT-PS unit, preferably comprises a power supply which preferably generates a DC feed voltage and a coupling circuit which couples the ISDN signals to and from the Central Office to the DC feed power. The DC Feed voltage is preferably ground referenced. The NT-PS unit may further comprise functions such as H.V. protection which protects the system from over voltages, overload safety protection, etc. NT-PS unit preferably allows for selection of two modes of operation, namely: high power operation for full functionality of the ISDN line, powering the NT2T and all terminals supported by the NT2T and low power for "Life-Line" telephone communications only in the absence of local AC power. This enables the "grade of services" supplied to a particular customer's ISDN system to be determined from the central office.

According to one preferred embodiment of the invention, the NT-PS is capable of serving a number of ISDN lines, i.e. a number of the network to telephone termination modules, each supporting user terminals. In this connection, an additional aspect of the invention is a power supply block, being either a basic or an additional component of the ISDN system and capable of providing back-up to a number of ISDN lines.

There is thus provided, in accordance with a preferred embodiment of the invention, an ISDN system comprising:
a network to telephone termination which supports a plurality of user terminals;
an ISDN data signal transceiver at the central office;
a line which connects the network to telephone termination to said transceiver and carries data signals to said plurality of user terminals; and
a power supply capable of supplying power to the network to telephone termination via said line such that said plurality of user terminals are fully powered from said network to telephone termination.

Preferably, the system includes a coupling circuit which couples data signals transmitted from said transceiver and the power from the power supply without changing the protocol of the data signals transmitted on the line.

Preferably, the plurality of user terminals comprises those supported and powered by the network to telephone termination via respective analog lines.

Preferably, said plurality of user terminals comprises those supported and powered by the network to telephone termination via respective digital lines.

There is further provided, in accordance with a preferred embodiment of the invention an ISDN system comprising:
a network to telephone termination which supports a plurality of user terminals, said network to telephone termination being powered by a local power source;
an ISDN data signal transceiver at a central office,
a line which connects the network to telephone termination to the ISDN data signal transceiver to carry data signals;
a power supply capable of providing power via said line,
wherein said power supply provides full power for the network to telephone termination via said line to support said plurality of user terminals in the absence of power from said local power source.

Preferably, the ISDN system includes
a coupling circuit associated with the power supply, for coupling data signals transmitted from said transceiver and the power from the power supply onto the line such that both power for the network to telephone termination and data signals are carried over the same line.

Preferably, the network to telephone termination includes an interface which connects the network to telephone termination to said power supply to power the network to telephone termination in the absence of power from the local power source.

Preferably, the local power source is an AC mains power source.

Preferably, the power supply supplies DC power to the network to telephone termination.

In a preferred embodiment of the invention, said data signals are transferred on the line to the network to telephone termination according to the protocol of the ISDN data signals and without changing thereof, when the network to telephone termination is powered by said power supply.

There is further provided, in accordance with a preferred embodiment of the invention, an ISDN system comprising:
a network to telephone termination which supports a plurality of user terminals, said network to telephone termination being supplied by a local power source;
a line which connects the network to telephone termination to a central office;
an ISDN data signal transceiver at the central office, coupled to said line for transmitting and receiving data signals; and
a power supply capable of providing power via said line,
wherein power is selectively provided to the network to telephone termination from said power supply via said line, when power from said local power source is unavailable, at either at first, higher, level of available power or at a second, lower, level of available power.

Preferably, the first power level is a full power level required to power the network to telephone termination and said plurality of user terminals and said second power level is an emergency level required to support said network to telephone termination and only a limited number, for example, one or two, of said plurality of user terminals.

Preferably, the selected power level is determined at the power supply.

Preferably, the level of power availability is programmable, more preferably, remotely programmable.

In a preferred embodiment of the invention, the ISDN system includes a coupling circuit operative to couple said data signals from the transceiver and the power from the power supply onto the line such that both power for the network to telephone termination and data signals are transmitted over the same line.

Preferably, the central office supplies both the data signals and power to the network to telephone termination through a single line pair which connects the network to telephone termination to the central office.

In a preferred embodiment of the invention the power supply is situated between the central office and the network to telephone termination.

In a preferred embodiment of the invention, the power from said power supply and digital telephony signals to and from the central office are coupled onto said line pair in a coupling circuit associated with said power supply.

In a preferred embodiment of the invention, the ISDN system comprises a sensor associated with said power supply for detecting changes in the power utilized by the network to telephone termination.

There is further provided, in accordance with a preferred embodiment of the invention a method of retrofitting an existing ISDN system comprising a central office which is operative to transmit telecommunication signals via a line to a remote network to telephone termination, the method comprising:
providing a power supply capable of providing the full power required by said network to telephone termination ;
coupling said power supply with said line such that said remote network telephone termination can be provided with power voltage from said power supply and said telecommunication signals.

Preferably, the method includes providing a power converter at said remote network to telephone termination, wherein said power converter is operative to convert power received from said line to power usable by the network to telephone termination.

Preferably, the remote network to telephone termination is the same network to telephone termination which exists prior to the retrofit.

There is further provided, in accordance with a preferred embodiment of the invention, a power supply block adapted to be installed in an ISDN system as a back up power supply for user terminals of one or more network to telephone termination modules, said power supply block being capable of powering said modules via respective lines connecting the modules to the central office; said power supply block is adapted to provide power for keeping most or all of the terminals supported by said network to telephone termination modules in operation, said power supply block being further provided with a coupling circuit operative to combine power required for each of said lines and provided by said power supply with data signals transmitted therethrough.

Preferably, the power supply block has a programmable power availability. Preferably, the power availability is remotely controllable.

There is further provided, in accordance with a preferred embodiment of the invention, an ISDN system comprising:
a plurality of ISDN data signal transceivers capable of transmitting telecommunication signals to a plurality of network to telephone termination modules via respective lines;
each of said network to telephone termination modules supporting a number of user terminals;
a back-up power supply,
wherein said back-up power supply being adapted to provide each of said network to telephone terminations, via said respective lines, with a power supply required for operating most or all of said user terminals.

### BRIEF DESCRIPTION OF THE DRAWINGS

The present invention will be more fully understood from the following detailed description of preferred embodiments thereof, taken together with the attached drawings, in which:
Fig. 1 schematically shows a conventional ISDN system;
Fig. 2 schematically shows part of an ISDN system in accordance with a preferred embodiment of the present invention, which system supplies power from the central office to a customer's premises;
Fig. 3 shows a typical functional block diagram of a preferred embodiment of a network to telephone termination (NT2T) in accordance with the present invention;
Fig. 4 schematically shows a typical functional block diagram of a preferred embodiment of an NT Power Supply (NT-PS), in accordance with a preferred embodiment of the present invention; and
Fig. 5 schematically shows a preferred wiring scheme of a preferred embodiment for connecting a NT-PS system into an ISDN communication line at central office end, in accordance with a preferred embodiment of the present invention.

### DETAILED DESCRIPTION OF PREFERRED EMBODIMENTS

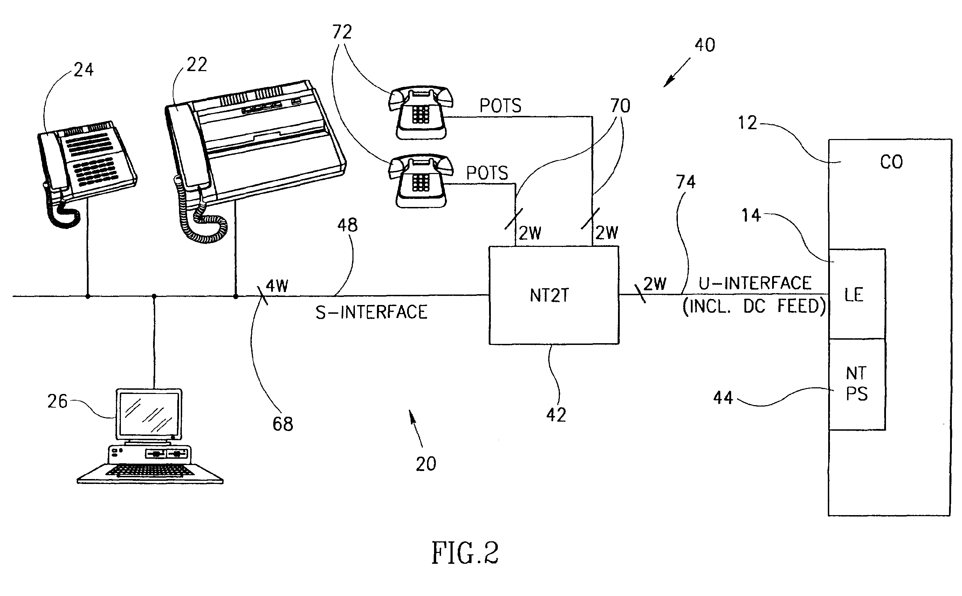

Fig. 2 schematically shows part of an ISDN system 40 in accordance with a preferred embodiment of the present invention, which extends from a central office (CO) 12 to a customer's premises 20. ISDN system 40 comprises conventional customer equipment such as ISDN fax 22, ISDN Phone 24, computer 26, whose details are not necessary for the understanding of preferred embodiments in accordance with the present invention. It also includes an NT-PS unit 44 and a local exchange (LE) 14 installed at CO 12.

In some preferred embodiments of the present invention, ISDN system 40 preferably includes an NT Power Supply unit (NT-PS) 44 (either installed in the central office, or separately, to be connected to line 74) and a novel NT2T unit 42, which may be thought of as combining a conventional ISDN network termination (NT) unit 16 (Fig. 1), with two terminal adapter (TA) 18, units of a conventional design. NT2T unit 42 preferably supports at least one digital 4-wired "S" interface 68 and at least one, but preferably two analog 2-wire interfaces 70. At the digital "S" interface, NT2T unit 42 preferably provides full-duplex 192 Kbps point-to-point or point-to-multipoint connections while at each of the analog interfaces it provides a connection to analog telephone 72 or fax "group 2/3" or conventional modems (for example complying with V.34 and/or V.90) or for any other use as is known in the art. NT2T 42 is preferably supplied with power from NT-PS 44 via line 74. This feed makes it independent of local power and eliminates the need for installing a second copper line for a "life-line" phone.

This configuration has the advantage that standard LE and NT equipment may be used and even already installed ISDN service may be retrofitted to the system shown in Fig. 2. This may be easily done by coupling the power from NT-PS 44 onto an ordinary ISDN line and then powering NT2T 42 using this power. In one preferred embodiment of the invention an existing NT is changed to an NT2T. Alternatively, the existing NT is used and a power converter is added which coverts the power transmitted over the ISDN line to power (such as AC power) suitable for powering the NT.

By supplying power to digital terminations connected to "S/T" bus 48 **("S" interface)** and to analog terminations 70, NT2T 42 provides a full "Life-Line" service for analog telephony signals and ISDN services including full functionality at all times, with no need for an additional line. NT2T 42 is preferably connected to local exchange 14 unit with either 2B1Q or 4B3T high speed transmission code utilizing standard ISDN coding. Preferably NT2T 42 also provides one or more functions such as generating 12 or 16 kHz metering impulses, where required and phone signaling with pulse and DTMF dialing, recognition ringing, for example, at 20 Hz. Preferably and additionally NT2T 42 encodes and decodes the voice signals, allows for software update without replacement of any components or parts of the system and implements functions such as loading operative firmware, diagnostics and configuration, either locally, from one of the two telephones 72 or remotely, from a distant telephone. Preferably, NT2T 42 also provides an optional mains interface for connecting the system to AC power feed at customer premises 20 and automatic switching over to its DC power supply at the CO when local power fails. Additionally or alternatively, it is also possible to configure NT2T 42 so that it operates in a mode in which only the functioning of analog phone terminals 72 is enabled, while the "S" bus use is disabled when power fails.

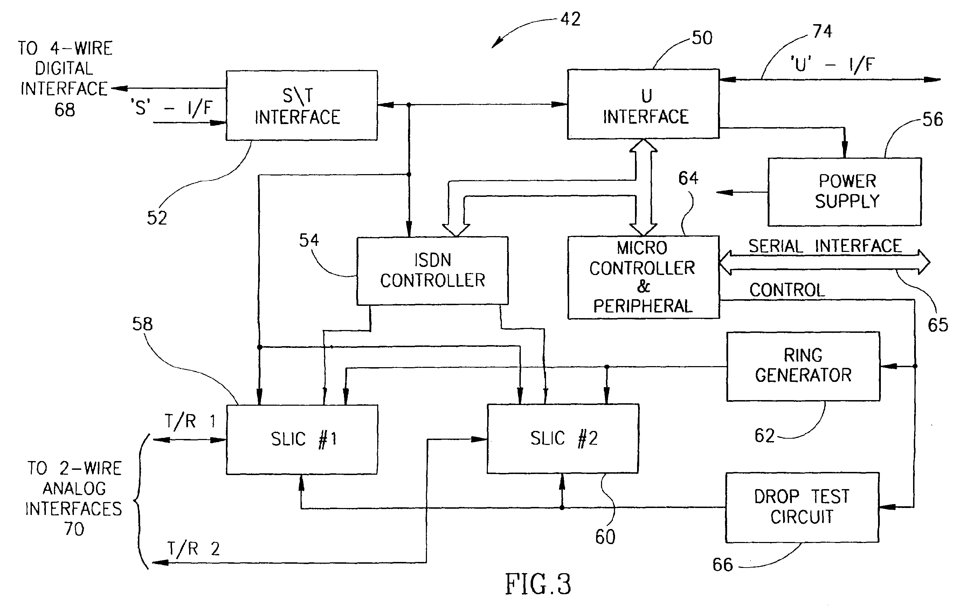

Reference is now made to Fig. 3 which shows a typical functional block diagram of an embodiment of NT2T 42, in accordance with a preferred embodiment of the present invention. In its basic form, NT2T 42, preferably includes a U Interface 50, an S/T interface 52, an ISDN controller 54, a power supply 56, two SLIC (#1 and #2) 58 and 60 of analog phones, a ring generator 62, a micro controller 64 and a drop test circuit 66. Other configurations, functional divisions and number of functional blocks allowing for at least part of the above described functionality of the NT2T 42 within the scope of the present invention will occur to persons of skill in the art.

U-interface 50 is preferably a 160 Kbps 2-wire ISDN transceiver which terminates the connection in the distribution network towards CO 12. The U-interface receives the DC feed power and digital and analog telephony signals for and from the central office through a single 2-wire line 74. The DC feed power is then routed to power supply 56 which generates the voltages needed for digital and analog communications and for internal operation of different parts of NT2T 42, while digital and analog data and communication signals are oriented to S/T Interface 52 and SLIC #1, #2 interfaces 58 and 60, respectively by ISDN controller 54. S/T interface 52 is preferably a 4-wire ISDN transceiver which terminates the exchange side of the "S/T" user bus and which preferably also performs echo canceling and information framing. Digital and plain telephony signals are routed under the control of ISDN controller 54 which manages ISDN B and D channels preferably according to demand while micro-controller 64, which preferably has serial line port 65 for configuration programming, software down load, data transfer, etc., controls all other blo cks in the configuration, runs the ISDN protocols and controls the NT2T configuration. Analog telephony signals are routed to and from plain telephone terminals by SLIC #1, #2 interfaces 58 and 60, which operate under the control of ISDN controller 54. 20 Hz (or other frequency) ring power signals for the plain telephone terminals are generated by ring generator 62. Drop test circuit 66, evaluates the analog telephone line's status.

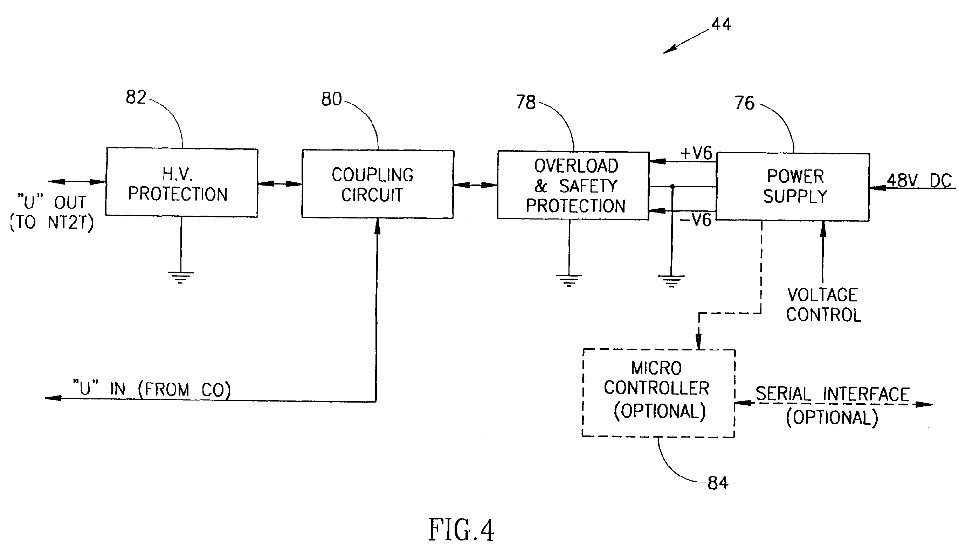

FIG. 4 schematically shows a typical functional block diagram of a preferred embodiment of NT2T power supply (NT-PS) unit 44, in accordance with a preferred embodiment of the present invention. NT-PS unit 44 preferably comprises a power supply 76 and a coupling circuit 80. NT-PS unit 44 may preferably further comprise an overload and safety protection unit 78, a H.V. protection unit 82, and an optional control interface 84.

NT-PS unit 44, including its coupling circuit 80 through which the ISDN signals transit, is preferably installed at central office 12 and generates all the DC feed power needed to operate the ISDN system. NT 42, which terminates "S/T" user bus 48 towards the distribution network, preferably supports a multitude of digital terminals and at least one and preferably two analog phone (plain telephones, modems or "group 3" faxes) terminals, preferably at all times. All parameters of the ISDN system are preferably programmable.

Power supply 76 generates the power needed to power NT2T 42. In one preferred embodiment of the invention, power supply 76 supplies full power to NT2T 42 in order to power the NT2T unit itself and all lines supported by NT2T 42. In a second embodiment of the invention, power supply 76 supplies this full power only if no local power supply is available at the user site. In yet a third embodiment of the invention, the operational power level is switchable at the CO between a high power level at which full functionality of NT2T 42 and its peripherals is supported in the absence of local power and a low power level at which only emergency power is supplied to NT2T 42. Under emergency power conditions only one or at most two terminals such as a analog telephony life-line is supported.

Overload and safety protection unit 78 preferably provides proper mechanisms to preserve safety requirements and to protect power supply unit 44 from any overload condition and the user from any electrical hazards. H.V. protection unit 82 provides protection, preferably against environmental effects such as, but not limited to, RFI and EMI, lightning, power cross, over voltage, etc. Coupling circuit 80 which may be of any conventional design known to persons in the art, is a preferably passive circuit which couples the DC feed power from power supply 76 with ISDN signals to and from the central office without affecting the performances of the line. NT-PS unit 44 preferably also indications on operational status, power usage level, etc. Switching from normal to emergency power feed and vice versa is preferably automatic and according to available power level. In some other preferred embodiments, switching from normal to emergency power feed and vice versa is preferably decided upon in accordance with thresholds set on power usage level both on the NT-PS unit panel, not shown, and/or through an optional control interface 84 at the central office. When included in the unit, interface 84, is preferably, also used to remotely configure the operational voltage level of NT-PS 44.

In a preferred embodiment of the invention, the AC power source at the customer location supplies all the power required for the local portion of the system. When the AC power is interrupted NT-PS unit 44, senses the change and the power supply at the central office is automatically engaged. NT-PS unit 44 also senses the DC power level on line 74 and sets the operation of the local system accordingly. When the voltage is high, as for example ± 120 volts, full functionality of the local ISDN system is provided. If the voltage is low, as for example ± 45 volts, only "life-line" services to one or more analog telephones via SLIC #1 or SLIC #2 (Fig. 3) is provided. The change of operation between full functionality and only "life-line" services is automatically performed whenever the DC power is reduced below a given level, as for example ± 90 volts. Switching from local to CO supplied power is preferably automatic, when local power fails.

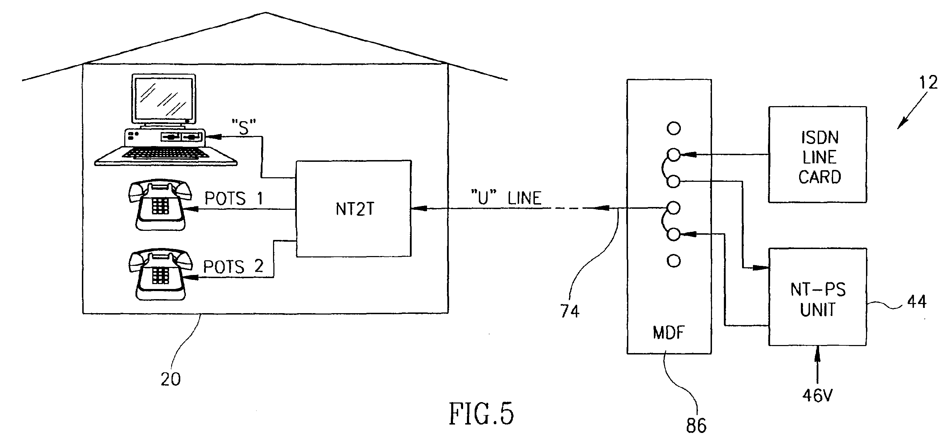

Fig. 5 schematically shows a preferred wiring scheme of a preferred embodiment for connecting an NT-PS system into an ISDN communication line at central office 12, in accordance with a preferred embodiment of the present invention. The connection of the NT-PS system into an ISDN line is quite straight forward and very similar to the way pair gain systems are added to a public switched telephone network. The central office is prepared for an NT2T system by only installing the LE infrastructure and connecting it to a battery in the central office. During installation of, or during an upgrade from a conventional ISDN line, an NT-PS unit 44 is inserted into the NT infrastructure and MDF 86 is rewired so that "U" line 74 is routed through an HV protection unit 82 and a coupling circuit 80 of NT-PS unit 44. In accordance with Fig. 5 and with a preferred embodiment of the present invention, an ISDN communication line including a NT2T requires only one line which also serves to power feed the digital and analog terminals at customer premises and is a "Life-Line".

It is understood that the invention has been described with reference to specific exemplary embodiments. It will, however, be evident that various modifications and changes may be made without departing from the scope of the invention as defined by the claims.

The terms "comprise", "include" or "have" or their conjugates, when used herein mean "including but not limited to."

## Claims

1. An ISDN system comprising:
a network to telephone termination which supports a plurality of user terminals;
an ISDN data signal transceiver at the central office;
a line which connects the network to telephone termination to said transceiver and carries data signals to said plurality of user terminals; and
a power supply capable of supplying power to the network to telephone termination via said line such that said plurality of user terminals are fully powered from said network to telephone termination.

2. An ISDN system according to claim 1 and including
a coupling circuit which couples data signals transmitted from said transceiver and the power from the power supply without changing the protocol of the data signals transmitted on the line.

3. An ISDN system according to claim 1 or claim 2 in which said plurality of user terminals comprises those supported and powered by the network to telephone termination via respective analog lines..

4. An ISDN system according to any of claims 1-3, wherein said plurality of user terminals comprises those supported and powered by the network to telephone termination via respective digital lines.

5. An ISDN system comprising:
a network to telephone termination which supports a plurality of user terminals, said network to telephone termination being powered by a local power source;
an ISDN data signal transceiver at a central office,
a line which connects the network to telephone termination to the ISDN data signal transceiver to carry data signals;
a power supply capable of providing power via said line,
wherein said power supply provides full power for the network to telephone termination via said line to support said plurality of user terminals in the absence of power from said local power source.

6. An ISDN system according to claim 5 and including:
a coupling circuit associated with the power supply, for coupling data signals transmitted from said transceiver and the power from the power supply onto the line such that both power for the network to telephone termination and data signals are carried over the same line.

7. An ISDN system according to claim 5 or claim 6 wherein the network to telephone termination includes an interface which connects the network to telephone termination to said power supply to power the network to telephone termination in the absence of power from the local power source.

8. An ISDN system according to any of claims 5-7 wherein said local power source is an AC mains power source.

9. An ISDN system according to any of claims 5-8 wherein said power supply supplies DC power to the network to telephone termination.

10. An ISDN system according to any of claims 5-9 wherein said data signals are transferred on the line to the network to telephone termination according to the protocol of the ISDN data signals and without changing thereof, when the network to telephone termination is powered by said power supply.

11. An ISDN system comprising:
a network to telephone termination which supports a plurality of user terminals, said network to telephone termination being supplied by a local power source;
a line which connects the network to telephone termination to a central office;
an ISDN data signal transceiver at the central office, coupled to said line for transmitting and receiving data signals; and
a power supply capable of providing power via said line,
wherein power is selectively provided to the network to telephone termination from said power supply via said line, when power from said local power source is unavailable, at either at first, higher, level of available power or at a second, lower, level of available power.

12. An ISDN system according to claim 11 in which said first power level is a full power level required to power the network to telephone termination and said plurality of user terminals and said second power level is an emergency level required to support said network to telephone termination and only a limited number of said plurality of user terminals.

13. An ISDN system according to claim 12 wherein said limited number is one.

14. An ISDN system according to claim 12 wherein said limited number is two.

15. An ISDN system according to any of claims 11-14 wherein the selected power level is determined at the power supply.

16. An ISDN system according to any of claims 11-15 wherein the level of power availability is programmable.

17. An ISDN system according to any of claims 11-16 wherein the level of power level availability is remotely programmable.

18. An ISDN system according to any of claims 11-17 and including:
a coupling circuit operative to couple said data signals from the transceiver and the power from the power supply onto the line such that both power for the network to telephone termination and data signals are transmitted over the same line.

19. An ISDN system according to any of the preceding claims wherein the central office supplies both the data signals and power to the network to telephone termination through a single line pair which connects the network to telephone termination to the central office.

20. An ISDN according to any one of Claims 11 to 18, wherein said power supply is situated between the central office and the network to telephone termination.

21. A ISDN system according to claim 19 or claim 20 wherein the power from said power supply and digital telephony signals to and from the central office are coupled onto said line pair in a coupling circuit associated with said power supply.

22. An ISDN system according to any of the preceding claims further comprising a sensor associated with said power supply for detecting changes in the power utilized by the network to telephone termination.

23. A method of retrofitting an existing ISDN system comprising a central office which is operative to transmit telecommunication signals via a line to a remote network to telephone termination, the method comprising:
providing a power supply capable of providing the full power required by said network to telephone termination ;
coupling said power supply with said line such that said remote network telephone termination can be provided with power voltage from said power supply and said telecommunication signals.

24. A method according to claim 23, comprising:
providing a power converter at said remote network to telephone termination, wherein said power converter is operative to convert power received from said line to power usable by the network to telephone termination.

25. A method according to claim 23 or claim 24 wherein the remote network to telephone termination is the same network to telephone termination which exists prior to the retrofit.

26. A power supply block adapted to be installed in an ISDN system as a back up power supply for user terminals of one or more network to telephone termination modules, said power supply block being capable of powering said modules via respective lines connecting the modules to the central office; said power supply block is adapted to provide power for keeping most or all of the terminals supported by said network to telephone termination modules in operation, said power supply block being further provided with a coupling circuit operative to combine power required for each of said lines and provided by said power supply with data signals transmitted therethrough.

27. The power supply block according to claim 26, having a programmable power availability.

28. The power supply block according to claim 27, wherein said power availability is remotely controllable.

29. An ISDN system comprising:
a plurality of ISDN data signal transceivers capable of transmitting telecommunication signals to a plurality of network to telephone termination modules via respective lines;
each of said network to telephone termination modules supporting a number of user terminals;
a back-up power supply,
wherein said back-up power supply being adapted to provide each of said network to telephone terminations, via said respective lines, with a power supply required for operating most or all of said user terminals.
